# EUROPEAN PATENT SPECIFICATION

(11) **EP 3 657 730 B1**
(45) Date of publication and mention of the grant of the patent: **05.01.2022**
(21) Application number: 18846856.5
(22) Date of filing: 31.07.2018
(51) Int. Cl.: H04L 12/14, H04W 4/24, H04M 15/00, H04W 28/10

(54) **OFFLINE CHARGING RECORD THRESHOLD CONTROL METHODS, NETWORK ELEMENTS, COMPUTER PROGRAMS AND SYSTEM BASED ON CUPS PROTOCOL**
VERFAHREN, NETZWERKELEMENTE, COMPUTERPROGRAMME UND SYSTEM ZUR STEUERUNG VON OFFLINE-VERRECHNUNGSAUFZEICHNUNGSGRENZEN AUF DER GRUNDLAGE EINES CUPS-PROTOKOLLS
PROCÉDÉS, MÉTHODES, ÉLÉMENTS DE RÉSEAU, PROGRAMMES INFORMATIQUES ET SYSTÈME DE COMMANDE DE SEUIL D'ENREGISTREMENT DE FACTURATION HORS LIGNE BASÉS SUR LE PROTOCOLE CUPS

(30) Priority: 14.08.2017 CN 201710692696
(43) Date of publication of application: 27.05.2020
(73) Proprietor: Huawei Technologies Co., Ltd., Longgang District Shenzhen, Guangdong 518129 (CN)
(72) Inventor: XIA, Xiaoyi, Shenzhen Guangdong 518129 (CN)
(74) Representative: Thun, Clemens
(86) International application number: PCT/CN2018/097768
(87) International publication number: WO 2019/033919

(56) References cited:
- WO-A1-2017/133342
- CN-A- 103 684 802
- CN-A- 107 040 674
- "3rd Generation Partnership Project; Technical Specification Group Services and System Aspects; Telecommunication management; Charging management; Packet Switched (PS) domain charging (Release 9)", 3GPP STANDARD; 3GPP TS 32.251, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. V9.13.0, 18 December 2015 (2015-12-18), pages 1-79, XP051047080, [retrieved on 2015-12-18]
- ZTE: "Clarification of Charging for CUPS", SA WG2 Meeting #114 S2-161758, 5 April 2016 (2016-04-05), XP051086722, Retrieved from the Internet: URL:http://ww.3gpp.org/ftp/tsg_sa/WG2_Arch / TSGS2_114_Sophia_Antipolis/Docs
- ALCATEL -LUCENT: "Clarify ''Change Condition'' settings in PS-information for offline Charging", 3GPP TSG-SA5 (Telecom Management) S5-100396, 17 March 2010 (2010-03-17), pages 5-100396, XP050440246, Retrieved from the Internet: URL:http://www . 3gpp . org/spe- cs/CR . htm

## Description

### TECHNICAL FIELD

This application relates to the field of communications technologies, and in particular, to offline charging call detail record threshold control methods, network elements, computer programs and system based on a CUPS protocol.

### BACKGROUND

In a network architecture compliant with 3GPP R14, an EPC gateway (including an SGW (Serving Gateway, serving gateway), a PGW (Public Data Network Gateway, public data network gateway), and a TDF (Traffic Detection Function, traffic detection function)) is split into a control plane network element (Control Plane, CP) and a user plane network element (User Plane, UP). The CP and the UP cooperate to complete functions of the original EPC gateway. In a 3GPP protocol, content specific to this network architecture is also referred to as a CUPS protocol.

The CP interacts with the UP through an Sx interface, to implement functions of the original EPC gateway, such as data forwarding, policy control, and charging. The CP summarizes charging results, generates a call detail record or a charging message based on the charging result, and sends the call detail record or the charging message to a surrounding CG (Charging Gateway, charging gateway), a surrounding OCS (Online Charging System, online charging system), and the like. Then, the UP reports charging information such as original charging data, used traffic, and used time to the CP. After that, the CP delivers a URR (Usage Report Rule, usage report rule)-based message to the UP through an Sx interface. The URR-based message includes parameters such as a traffic threshold, a time threshold, a tariff switch time (Monitoring Time), and Report-Trigger indicating an instant query, to instruct the UP how to report the charging information.

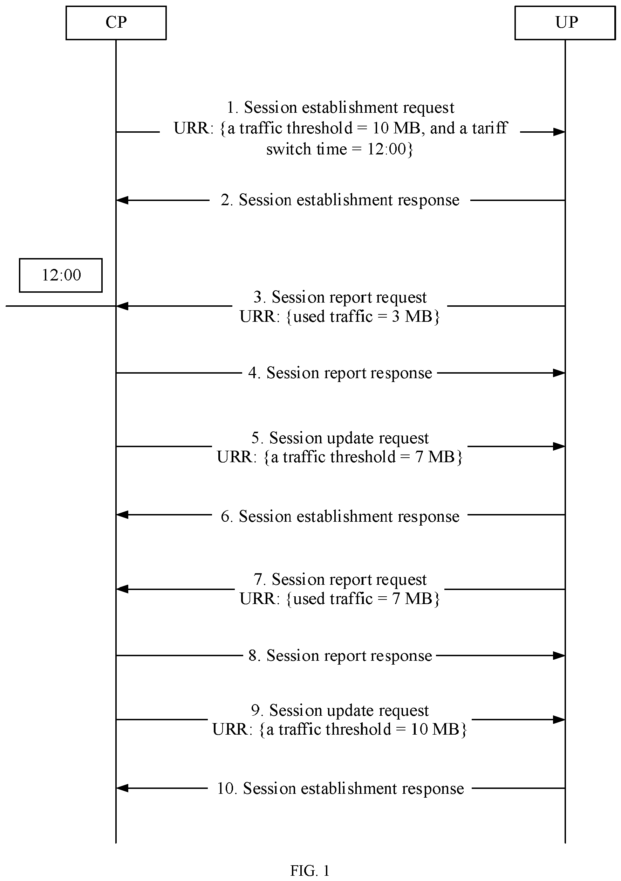

The CP may generate an offline charging call detail record based on the charging information reported by the UP. On a CP side, an offline charging call detail record is generated when time reaches a corresponding time threshold or traffic reaches a corresponding traffic threshold, or when a quantity of traffic containers reaches a preset upper limit. When a tariff switch time arrives or when a container closing event occurs, the CP generates a traffic container for the offline charging call detail record, but does not necessarily generate the offline charging call detail record. According to a stipulation in the existing CUPS protocol, the traffic threshold (and/or the time threshold) on the CP side is forcibly updated each time after the UP reports charging information. An example in which a threshold is the traffic threshold is used. If an offline charging call detail record does not need to be generated on the CP side after the UP reports charging information, the CP recalculates a current traffic threshold based on a latest traffic usage status reported by the UP, and instructs the UP to update the traffic threshold. Subsequently, when a condition for generating the offline charging call detail record is met and the offline charging call detail record is generated, the CP needs to restore an original traffic threshold and instructs the UP to reset the traffic threshold. Specifically, an interaction process between the CP and the UP is shown in FIG. 1. For example, it is assumed that a traffic threshold of an offline charging call detail record is 10 M, and a tariff switch time is 12:00. The interaction process between the CP and the UP includes the following steps.
1. After establishing a session, the CP delivers a URR-based message (Sx Session Establish Request, namely, a session establishment request through an Sx interface) to the UP. In the message, an initial traffic threshold (Volume Threshold) is set to 10 Band a tariff switch time (MT) is set to 12:00.
2. After receiving the message delivered by the CP, the UP returns a response message (Sx Session Establish Response, namely, a session establishment response through an Sx interface).
3. When the tariff switch time of 12:00 arrives, the UP reports, to the CP, charging information (that may be an Sx session report request, namely, a session report request through an Sx interface). At the time, traffic consumed on a UP side accumulates to 3 M, and a parameter (Volume Measurement) that indicates currently used traffic and that has a value of 3 M is carried in the charging information. In addition, the UP clears accumulated used traffic of a user.
4. After receiving the charging information, the CP processes the charging information and generates a traffic container, where the traffic container records that used traffic is 3 M before a tariff switch. In addition, the CP returns, to the UP, a response message (Sx Session Report Response, namely, a session report response through an Sx interface).
5. The CP calculates that there is remaining traffic of 7 M until closing of a current offline charging call detail record (which is also referred to as generation of the current offline charging call detail record), and sets a traffic threshold to 7 M in an update message (Sx Session Modification Request, namely, a session modification request through an Sx interface) to be sent to the UP.
6. After receiving the update message, the UP updates a traffic threshold on the UP side to 7 M and returns, to the CP, a response message (Sx Session Establish Response, namely, a session establishment response through an Sx interface (accumulated used traffic on the UP side is cleared, which is equivalent to reestablishment of a session, and therefore, it can be a session establishment response)).
7. The UP continues to monitor a traffic usage status of the user, and when accumulated used traffic of the user reaches an updated traffic threshold (7 M) on the UP side, the UP reports, to the CP again, charging information (that may be an Sx session report request, namely, a session report request through an Sx interface). The charging information carries a parameter indicating traffic used since last reporting, and a value of the parameter is 7 M. It should be noted that each time the UP reports, to the CP, only used traffic that is generated between current reporting and last reporting instead of used traffic accumulated. In step 6, used traffic accumulated until the last reporting is cleared. Therefore, the accumulated used traffic in this step is equal to the traffic used since the last reporting.
8. After receiving the charging information reported by the UP, the CP returns, to the UP, a response message (Sx Session Report Response, namely, a session report response through an Sx interface) and generates a traffic container again, where the traffic container records that used traffic is 7 M after the tariff switch. Because total used traffic reaches the initial traffic threshold of 10 M, the CP closes the current offline charging call detail record (that is, generates an offline charging call detail record).
9. After closing the current offline charging call detail record, the CP sends, to the UP, an update message (Sx Session Modification Request, namely, a session modification request through an Sx interface), to instruct the UP to restore a traffic threshold to 10 M.
10. After receiving the update message, the UP restores the traffic threshold on the UP side to 10 M and returns, to the CP, a response message (Sx Session Establish Response, namely, a session establishment response through an Sx interface).

However, the existing manner of forcibly updating a traffic threshold based on charging information reported by the UP has the following problems: (1) Additional message exchange is required for updating the traffic threshold by the CP and the UP (a case of updating a time threshold is the same as this). (2) A delayed threshold update may cause a charging result of an offline charging call detail record to exceed the threshold. For example, in a process shown in FIG. 1, if used traffic on the UP side is 9 M instead of 3 M when the tariff switch time arrives, when the CP instructs the UP to update the traffic threshold to 1 M, the UP may have already used traffic of 2 M again. In this way, even if a currently opened offline charging call detail record is closed immediately, a traffic charging result for the offline charging call detail record is 9 M + 2 M = 11 M. This may cause an error in subsequent processing of the offline charging call detail record.

The document WO 2017/133342 A1 shows a charging method, device and system. Especially, it shows reacting to a charging trigger event.

The document "3rd Generation Partnership Project; technical specification group services and system aspects; telecommunication management; charging management; packet switched (PS) domain charging (release 9)", 3GPP standard; 3GPP TS 32.251 is a standardization document dealing with packet switched domain charging.

### SUMMARY

The present invention is defined by the independent claims. Embodiments labelled as inventive embodiments in the following, which are not covered by the scope of protection defined by the independent claims, are to be understood as examples helpful for understanding the invention, but not as embodiments of the invention.

This application provides an offline charging call detail record threshold control method and system based on a CUPS protocol, to reduce signaling interaction between a CP and a UP caused by a threshold update, thereby preventing accumulated used traffic from exceeding a traffic threshold due to a delay in transmission of a threshold update message.

According to a first aspect, an embodiment of this application provides an offline charging call detail record threshold control method based on a CUPS protocol, where the method is applied to a user plane network element side, and includes: receiving, by a user plane network element, a first message sent by a control plane network element, where the first message carries a maximum quantity of charging condition changes, and the maximum quantity of charging condition changes is equal to a maximum quantity of traffic containers generated by the control plane network element in an offline charging call detail record; calculating, by the user plane network element, a quantity of charging condition changes when an event of reporting charging information to the control plane network element occurs; reserving, by the user plane network element, a currently accumulated used traffic and/or a currently accumulated used time value if the quantity of charging condition changes is less than the maximum quantity of charging condition changes; clearing, by the user plane network element, charging information on the user plane network element side if the quantity of charging condition changes is equal to the maximum quantity of charging condition changes. This implementation can reduce additional signaling interaction between a CP and a UP caused by a threshold update, thereby preventing accumulated used traffic from exceeding a traffic threshold due to a delay in transmission of a threshold update message.

With reference to the first aspect, in a first possible implementation of the first aspect, the first message further carries a time threshold and/or a traffic threshold. In this implementation, a message carries both a parameter such as a frequently used time threshold and the maximum quantity of charging condition changes, and an additional message does not need to be used to transmit the maximum quantity of charging condition changes, thereby reducing message exchanges between the control plane network element and the user plane network element.

With reference to the first aspect, in a second possible implementation of the first aspect, when a charging information reporting condition is met or an instant query request sent by the control plane network element is received, the event of reporting, by the user plane network element, charging information to the control plane network element occurs, where the charging information reporting condition includes that a current time is a tariff switch time. The user plane network element mainly uses the two trigger manners mentioned above to report charging information to the control plane network element. To be specific, the user plane network element automatically reports charging information based on a reporting condition, and the user plane network element reports charging information based on an instant query request from the control plane network element. The reporting condition includes that a tariff switch time arrives and further includes that a threshold (a time threshold or a traffic threshold) is reached. In addition, when a quantity of charging condition changes is equal to the maximum quantity of charging condition changes, the user plane network element may report charging information to the control plane network element once.

With reference to the second possible implementation of the first aspect, in a third possible implementation of the first aspect, the instant query request carries an indication parameter, where the indication parameter is used to indicate whether the control plane network element closes a currently opened offline charging call detail record after receiving charging information reported by the user plane network element. In this implementation, the indication parameter is set. Based on a set value of the indication parameter, when sending the instant query request, the control plane network element may instruct the user plane network element to close the currently opened offline charging call detail record (that is, to generate an offline charging call detail record), or only generate a traffic container after the user plane network element responds to the instant query request and reports the charging information. If only the traffic container is generated, the user plane network element adds 1 to the quantity of charging condition changes, determines whether the quantity of charging condition changes is less than the maximum quantity of charging condition changes, and continues to perform the process according to the first aspect. If the control plane network element closes the currently opened offline charging call detail record, the user plane network element may clear charging information on a user plane network element side after reporting the charging information. In this way, the control plane network element does not need to forcibly update a threshold after sending the instant query request and does not need to instruct the user plane network element to update the threshold, thereby reducing signaling interaction on both sides.

With reference to the third possible implementation of the first aspect, in a fourth possible implementation of the first aspect, if the indication parameter indicates that the control plane network element closes the currently opened offline charging call detail record after receiving the charging information reported by the user plane network element, the user plane network element clears charging information on the user plane network element side after reporting the charging information to the control plane network element. In this implementation, when a condition that the control plane network element closes the currently opened offline charging call detail record is triggered, the control plane network element does not need to update a threshold but to instruct, through the indication parameter, the user plane network element to clear the charging information. The user plane network element does not need to update the threshold either.

With reference to any one of the first aspect to the fourth possible implementation of the first aspect, in a fifth possible implementation of the first aspect, the method further includes: when accumulated used traffic reaches the traffic threshold or accumulated used time reaches the time threshold in the user plane network element, reporting, by the user plane network element, charging information to the control plane network element, and clearing charging information on the user plane network element side; and closing, by the control plane network element, the currently opened offline charging call detail record after receiving the charging information. In this implementation, the offline charging call detail record is generated when the accumulated used traffic reaches the traffic threshold or the accumulated used time reaches the time threshold, thereby avoiding an excessively large charging result of the offline charging call detail record.

According to a second aspect, an embodiment of this application provides an offline charging call detail record threshold control method based on a CUPS protocol, where the method is applied to a control plane network element side and includes: sending, by a control plane network element, a first message to a user plane network element, where the first message carries a maximum quantity of charging condition changes, and the maximum quantity of charging condition changes is equal to a maximum quantity of traffic containers generated by the control plane network element in an offline charging call detail record; and receiving charging information reported by the user plane network element, and generating a traffic container based on the charging information.

With reference to the second aspect, in a first possible implementation of the second aspect, the first message further carries a time threshold and/or a traffic threshold.

With reference to the second aspect, in a second possible implementation of the second aspect, the method further includes: sending an instant query request to the user plane network element, where the instant query request carries an indication parameter, and the indication parameter is used to indicate whether the control plane network element closes a currently opened offline charging call detail record after receiving the charging information reported by the user plane network element. With reference to the second possible implementation of the second aspect, in a third possible implementation of the second aspect, if the indication parameter indicates that the control plane network element closes the currently opened offline charging call detail record after receiving the charging information reported by the user plane network element, the currently opened offline charging call detail record is closed after the charging information reported by the user plane network element is received.

According to a third aspect, an embodiment of this application further provides a user plane network element, including a receiving unit, configured to receive a first message sent by a control plane network element, where the first message carries a maximum quantity of charging condition changes, and the maximum quantity of charging condition changes is equal to a maximum quantity of traffic containers generated by the control plane network element in an offline charging call detail record; a sending unit, configured to report charging information to the control plane network element; and a processing unit, configured to: calculate a quantity of charging condition changes when an event of reporting, by the sending unit, charging information to the control plane network element occurs, reserve a value of currently accumulated used traffic and/or a value of currently accumulated used time if the quantity of charging condition changes is less than the maximum quantity of charging condition changes, and clear charging information on a user plane network element side if the quantity of charging condition changes is equal to the maximum quantity of charging condition changes.

With reference to the third aspect, in a first possible implementation of the third aspect, the first message further carries a time threshold and/or a traffic threshold.

With reference to the third aspect, in a second possible implementation of the third aspect, when a charging information reporting condition is met or an instant query request sent by the control plane network element is received, the event of reporting, by the sending unit, charging information to the control plane network element occurs, where the charging information reporting condition includes that a current time is a tariff switch time.

With reference to the third aspect, in a third possible implementation of the third aspect, the instant query request carries an indication parameter, where the instant query request carries an indication parameter, and the indication parameter is used to indicate whether the control plane network element closes a currently opened offline charging call detail record after receiving the charging information reported by the user plane network element.

With reference to the third possible implementation of the third aspect, in a fourth possible implementation of the third aspect, if the indication parameter indicates that the control plane network element closes the currently opened offline charging call detail record after receiving the charging information reported by the user plane network element, the processing unit is further configured to clear charging information on the user plane network element side after the sending unit reports the charging information to the control plane network element.

With reference to any one of the third aspect to the fourth possible implementation of the third aspect, in a fifth possible implementation of the third aspect, the sending unit is specifically configured to report charging information to the control plane network element when accumulated used traffic reaches the traffic threshold or accumulated used time reaches the time threshold in the user plane network element; and the processing unit is further configured to clear charging information on the user plane network element side after the sending unit reports the charging information to the control plane network element.

According to a fourth aspect, an embodiment of this application provides a control plane network element, including: a sending unit, configured to send a first message to a user plane network element, where the first message carries a maximum quantity of charging condition changes, and the maximum quantity of charging condition changes is equal to a maximum quantity of traffic containers generated by the control plane network element in an offline charging call detail record; a receiving unit, configured to receive charging information reported by the user plane network element; and a processing unit, configured to generate a traffic container based on the charging information.

With reference to the fourth aspect, in a first possible implementation of the fourth aspect, the first message further carries a time threshold and/or a traffic threshold.

With reference to the fourth aspect, in a second possible implementation of the fourth aspect, the sending unit is further configured to send an instant query request to the user plane network element, the instant query request carries an indication parameter, and the indication parameter is used to indicate whether the control plane network element closes a currently opened offline charging call detail record after receiving the charging information reported by the user plane network element. With reference to the second possible implementation of the fourth aspect, in a third possible implementation of the fourth aspect, the processing unit is further configured to: if the indication parameter indicates that the control plane network element closes the currently opened offline charging call detail record after receiving the charging information reported by the user plane network element, close the currently opened offline charging call detail record after the receiving unit receives charging information reported by the user plane network element.

According to a fifth aspect, an embodiment of this application provides an offline charging call detail record threshold control system based on a CUPS protocol, where the system includes the user plane network element according to the third aspect and the control plane network element according to the fourth aspect.

According to a sixth aspect, this application provides a computer readable storage medium including an instruction, and when the instruction runs on a computer, the computer is enabled to perform the method in the first aspect or the second aspect.

According to a seventh aspect, this application provides a computer program product including an instruction, and when the computer program product runs on a computer, the computer is enabled to perform the method in the first aspect or the second aspect.

In the technical solutions provided in the embodiments of this application, after establishing a session, the CP sends a message to the UP, where the message carries a maximum quantity of charging condition changes (which is equal to a maximum quantity of traffic containers). The UP reports charging information to the CP based on an instant query request sent by the CP or a subscription condition, and calculates a quantity of traffic containers. If the quantity of traffic containers that is obtained through calculation is less than the maximum quantity of traffic containers, the UP does not need to update a threshold but continues to accumulate used traffic of a user on the basis of existing accumulated used traffic. If the quantity of traffic containers that is obtained through calculation is equal to the maximum quantity of traffic containers, the UP stops collecting charging information for a current offline charging call detail record and clears the charging information and the quantity of traffic containers for the current offline charging call detail record on a UP side. Correspondingly, the CP closes the offline charging call detail record. Therefore, the UP does not need to wait for the CP to send a threshold update message to update the threshold. This can not only reduce additional signaling interaction between the CP and the UP caused by a threshold update, but also can prevent accumulated used traffic from exceeding a traffic threshold due to a delay in transmission, thereby effectively avoiding an error in subsequent processing of the offline charging call detail record.

### BRIEF DESCRIPTION OF DRAWINGS

FIG. 1 is a flowchart of interaction between a CP and a UP in the prior art;
FIG. 2 is a schematic diagram of a network architecture obtained after separation between a control plane and a user plane is performed on an SGW, a PGW, and a TDF;
FIG. 3 is a schematic flowchart of an offline charging call detail record threshold control method based on a CUPS protocol according to an embodiment of this application;
FIG. 4 is a flowchart of interaction between a CP and a UP according to an implementation of the method shown in FIG. 3;
FIG. 5 is a flowchart of interaction between a CP and a UP according to another implementation of the method shown in FIG. 3;
FIG. 6 is a flowchart of interaction between a CP and a UP according to still another implementation of the method shown in FIG. 3;
FIG. 7 is a flowchart of interaction between a CP and a UP according to still another implementation of the method shown in FIG. 3;
FIG. 8 is a block diagram of a user plane network element according to an embodiment of this application; and
FIG. 9 is a block diagram of a control plane network element according to an embodiment of this application.

### DESCRIPTION OF EMBODIMENTS

In a network architecture compliant with 3GPP R14, an EPC gateway (including an SGW, a PGW, and a TDF) is split into a control plane network element (Control Plane, CP) and a user plane network element (User Plane, UP). The CP and the UP cooperate to complete functions of the original EPC gateway, not affecting a network element on a wireless side and another network element in a core network. Separation between the control plane and the user plane of the EPC gateway can optimize an EPC network, reduce a data transmission delay in the user plane, and save traffic in a backbone network.

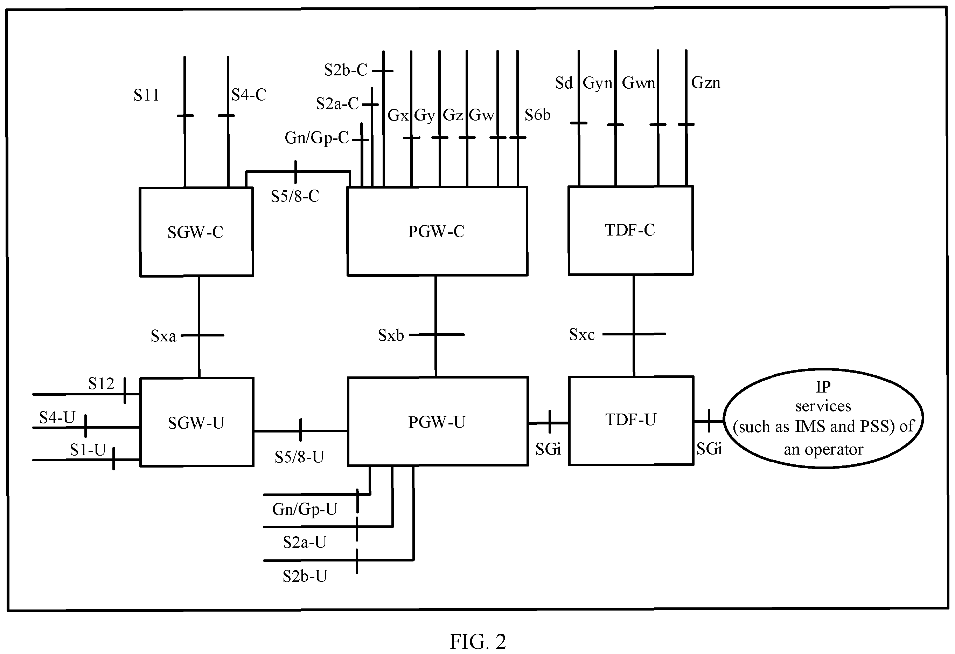

FIG. 2 is a network architecture obtained after separation between a control plane and a user plane is performed on an SGW, a PGW, and a TDF. The CP includes an SGW-C, a PGW-C, and a TDF-C. The UP includes an SGW-U, a PGW-U, and a TDF-U. The CP interacts with the UP through an Sx interface, to implement functions of the original EPC gateway, such as data forwarding, policy control, and charging. The CP summarizes charging results, generates a call detail record or a charging message based on the charging result, and sends the call detail record or the charging message to a surrounding CG, a surrounding OCS, and the like. Then, the UP collects and reports charging information such as original charging data, used traffic, and used time to the CP.

After establishing a session, the CP may generate one or more offline charging call detail records for the session. After opening an offline charging call detail record, the CP interacts with the UP, receives the charging information reported by the UP, records statuses of traffic usage and time usage, and closes the offline charging call detail record when traffic or time reaches a threshold. When the offline charging call detail record is closed, the offline charging call detail record is generated, to avoid an excessively large offline charging call detail record. Alternatively, when some specific events occur, for example, when an access technology type of a terminal changes or a time zone in which the terminal is located changes, the offline charging call detail record is closed (in other words, the offline charging call detail record is generated). One offline charging call detail record may include one or more traffic containers. The traffic container is used to record information such as traffic and time that are used by a user after an offline charging call detail record is opened. The traffic container may be generated when some specific events occur, for example, when a tariff switch time arrives, QoS (Quality of Service, quality of service) changes, or a user location changes. It should be noted that, after the specific event leading to generation of a traffic container occurs, only the traffic container needs to be generated, and an offline charging call detail record does not need to be generated. For an offline charging call detail record, an excessively large quantity of traffic containers results in an excessively long length of a call detail record. To avoid this, the 3GPP protocol specifies that when a quantity of traffic containers reaches a preset upper limit, an offline charging call detail record must be generated, and it is unnecessary to wait until a traffic threshold or a time threshold is reached. In other words, an offline charging call detail record is generated when time reaches a corresponding time threshold or traffic reaches a corresponding traffic threshold, or when a quantity of traffic containers reaches a preset upper limit. When a tariff switch time arrives or when a container closing event occurs, a traffic container for the offline charging call detail record is generated, but the offline charging call detail record is not necessarily generated. After establishing the session, the CP delivers a URR-based message to the UP through an Sx interface, to instruct the UP how to report the charging information to the CP. The URR-based message may include parameters of an offline charging call detail record, such as a traffic threshold, a time threshold, a tariff switch time, and Report-Trigger indicating an instant query.

In an existing CUPS protocol, there are two trigger manners for a UP to report charging information to a CP. To be specific, the UP automatically reports the charging information based on a subscription condition, and the UP reports the charging information based on an instant query request from the CP. The subscription condition refers to a condition that needs to be met for the UP to report the charging information. The subscription condition may be that accumulated used traffic reaches a traffic threshold, accumulated used time reaches a time threshold, a tariff switch time arrives, or the like. The CP sends an instant query request to the UP when there is a RAT (Radio Access Technology, radio access technology) change, an MS-TimeZone (Mobile Station Time Zone, mobile station time zone) change, a user location change, a QoS change, or the like. In some cases, the CP generates only a traffic container after sending an instant query request to the UP. In some cases, the CP directly closes a currently opened offline charging call detail record (that is, generates an offline charging call detail record) after sending an instant query request to the UP.

In the prior art, from opening to closing of each offline charging call detail record, updating of a threshold on a CP side and a condition of reporting charging information by a UP are bound. In addition, a CP further needs to repeatedly instruct, by using additional update messages, the UP to adjust a threshold. In the technical solutions provided in the embodiments of this application, a UP can determine whether a threshold needs to be updated and whether accumulated used traffic or accumulated used time needs to be cleared based on a parameter in a message sent by a CP after a session is established. The UP does not forcibly update the threshold by repeatedly receiving update messages from the CP, thereby reducing signaling interaction between the CP and the UP. In addition, because the update message does not need to be received from the CP, that the accumulated used traffic or the accumulated used time exceeds the threshold due to a delay of the update message is prevented.

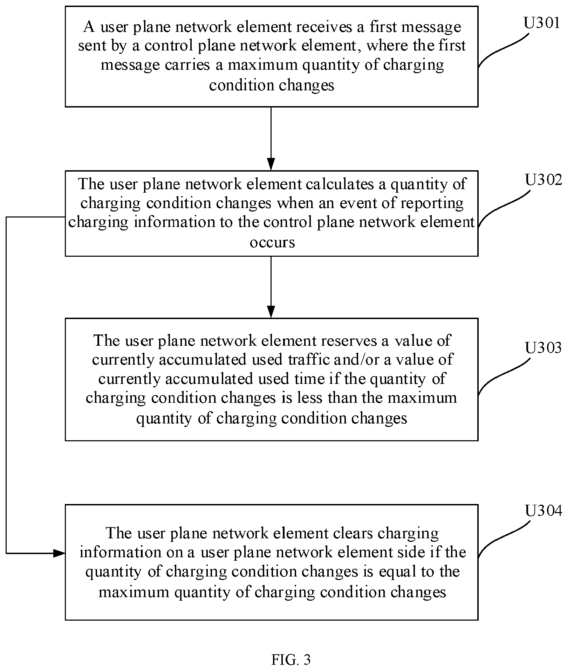

Referring to FIG. 3, an embodiment of this application provides an offline charging call detail record threshold control method based on a CUPS protocol, where the method includes the following steps. Step S301. A user plane network element receives a first message sent by a control plane network element, where the first message carries a maximum quantity of charging condition changes, and the maximum quantity of charging condition changes is equal to a maximum quantity of traffic containers generated by the control plane network element in an offline charging call detail record. Step S302. The user plane network element calculates a quantity of charging condition changes when an event of reporting charging information to the control plane network element occurs.

Step S303. The user plane network element reserves a value of currently accumulated used traffic and/or a value of currently accumulated used time if the quantity of charging condition changes is less than the maximum quantity of charging condition changes.

Step S304. The user plane network element clears charging information on a user plane network element side if the quantity of charging condition changes is equal to the maximum quantity of charging condition changes.

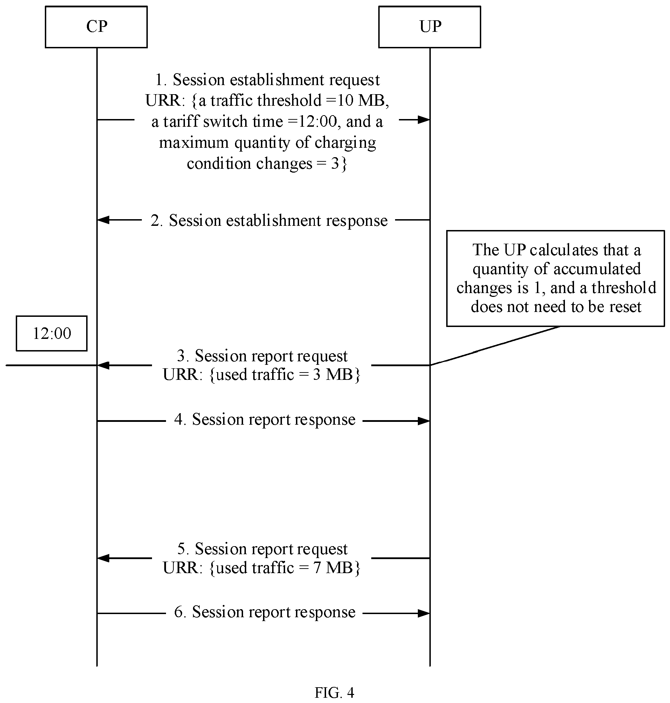

Specifically, in an implementation, the UP reports charging information to the CP based on a subscription condition. As shown in FIG. 4, a process of interaction between the CP and the UP may include the following steps.
1. The CP establishes a session and delivers a message to the UP. The message may be based on a URR (all the following messages may be based on the URR) and carries a tariff switch time (for example, 12:00), a traffic threshold (for example, 10 M), and a maximum quantity of charging condition changes (Maximum Number of Charging Condition Changes). The parameter is equal to a maximum quantity of traffic containers (that is, a parameter Max-condition-number in the figure, where Max-condition-number is set to 3 in this example) generated by the CP in an offline charging call detail record.
2. After receiving the message, the UP returns a response message.
3. When the tariff switch time of 12:00 arrives, a subscription condition is met for the UP to report charging information. Therefore, the UP reports the charging information to the CP, where the charging information carries currently used traffic (for example, 3 M). At a same time, the UP calculates that currently a quantity of traffic containers should be 1, and the value is less than the maximum quantity of traffic containers. Therefore, the traffic threshold does not need to be updated. The UP continues to monitor a traffic usage status of a user, does not clear currently accumulated used traffic, and continues to accumulate used traffic on the basis of accumulated used traffic in current reporting. In other words, the UP continues to accumulate used traffic on the basis of 3 M. It should be noted that from opening to closing of an offline charging call detail record, the CP generates a traffic container each time the CP receives charging information reported by the UP. Therefore, if not receiving a special indication (sent by the CP) indicating that the CP does not generate a traffic container, the UP may calculate a quantity of traffic containers that should be generated on a CP side based on a quantity of times of reporting charging information to the CP.
4. After receiving the charging information reported by the UP, the CP generates a traffic container and returns a response message to the UP, where the traffic container records that used traffic is 3 M before a tariff switch.
5. The UP continues to monitor a traffic usage status of the user, and traffic of 7 M is used by the user again after 12:00. When accumulated used traffic on a UP side is 10 M and reaches the traffic threshold, a subscription condition is met for the UP to report charging information. Therefore, the UP reports the charging information to the CP again, where the charging information carries traffic (7 M) used since last reporting. It should be noted that, after the accumulated used traffic reaches the traffic threshold and the UP reports the charging information, the UP stops recording and collecting charging information for a current offline charging call detail record, and clears the charging information for the current offline charging call detail record, to facilitate recording and collecting charging information for a next offline charging call detail record.
6. After receiving the charging information reported by the UP, the CP generates a traffic container again, where the traffic container records that used traffic is 7 M after the tariff switch. In this way, there are two traffic containers on the CP side for recording traffic used before and after the tariff switch respectively. Because the accumulated used traffic is 10 M and reaches the traffic threshold, the CP closes the current offline charging call detail record, that is, generates the current offline charging call detail record.

It should be noted that, in this example, the CP adds the traffic threshold, the tariff switch time, and the maximum quantity of charging condition changes (the maximum quantity of traffic containers) to one message to send the message to the UP. Alternatively, the CP may add the maximum quantity of charging condition changes to a separate message to send the message to the UP and add, same as that in the prior art, the traffic threshold and the tariff switch time to a URR-based message. However, in this manner, one more message is sent from the CP to the UP.

It can be seen that, compared with the prior art, the technical solution provided in the embodiment of this application can reduce signaling interaction between the CP and the UP. The UP only needs to report charging information to the CP when the tariff switch time arrives or when the accumulated used traffic reaches a total traffic threshold, and the UP does not need to wait the CP to send a threshold update message, thereby preventing the accumulated used traffic from exceeding the traffic threshold due to a transmission delay between the CP and the UP, and effectively avoiding an error in subsequent processing of the offline charging call detail record.

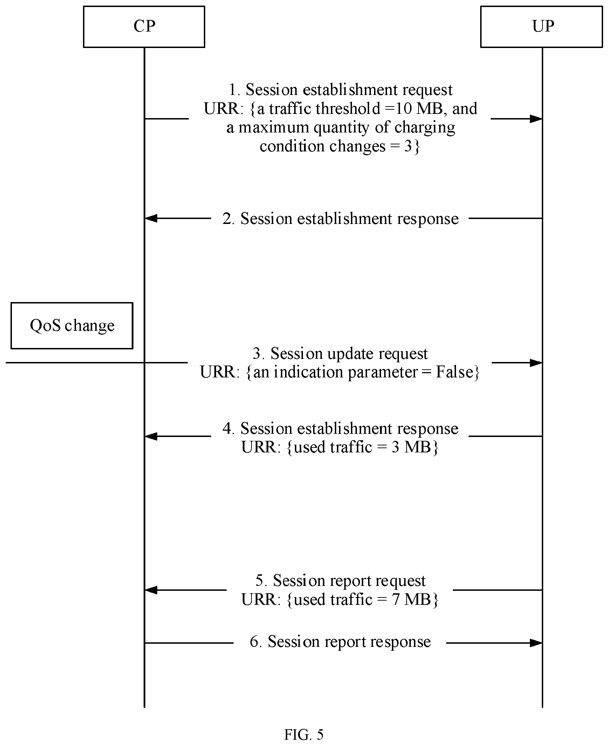

In another implementation, the UP reports charging information based on an instant query request from the CP. As shown in FIG. 5, a process of interaction between the CP and the UP may include the following steps.
1. The CP establishes a session and delivers a message to the UP. The message may be based on a URR and carries a traffic threshold (for example, 10 M) and a maximum quantity of charging condition changes (which is equal to a maximum quantity of traffic containers in an offline charging call detail record on a CP side and is represented as Max-condition-number in the figure, where Max-condition-number, for example, is equal to 3).
2. After receiving the message, the UP returns a response message.
3. When there is a QoS change in the CP, the CP only needs to generate a traffic container, and does not need to generate an offline charging call detail record or update a threshold. Due to the QoS change, the CP sends an instant query message (that may be an Sx session modification request) to the UP. The instant query message (that may be based on a URR) carries an indication parameter having a set value. The set value is used to indicate that the CP closes an offline call detail record (for example, the set value is True), or only generates a traffic container (for example, the set value is False). In this example, the CP sets a value of the indication parameter in the instant query message to False, to indicate, to the UP, that the offline charging call detail record is not closed and only a traffic container is generated on the CP side.
4. After receiving the instant query message sent by the CP, the UP reports charging information to the CP (by using an Sx session establish response). The charging information includes currently used traffic (for example, 3 M). At a same time, the UP calculates that currently a quantity of traffic containers should be 1, and the value is less than the maximum quantity of traffic containers. Therefore, the traffic threshold does not need to be updated. The UP continues to monitor a traffic usage status of a user, does not clear currently accumulated used traffic, and continues to accumulate used traffic on the basis of accumulated used traffic in current reporting. In other words, the UP continues to accumulate used traffic on the basis of 3 M.

The CP receives the charging information and generates a traffic container, where the traffic container records that currently used traffic is 3 M.

5. The UP continues to monitor a traffic usage status of the user, and traffic of 7 M is used by the user again. When accumulated used traffic on a UP side is 10 M and reaches the traffic threshold, a subscription condition is met for the UP to report charging information. Therefore, the UP reports the charging information to the CP, where the charging information includes traffic (7 M) used since last reporting of charging information.

6. After receiving the charging information reported by the UP, the CP generates a traffic container again, where the traffic container records the used traffic of 7 M in the charging information. Because the accumulated used traffic is 10 M and reaches the traffic threshold, the CP closes a current offline charging call detail record, that is, generates the current offline charging call detail record.

It should be noted that, if the value of the indication parameter carried by the CP in the instant query request indicates that the CP closes the offline charging call detail record, the UP reports charging information to the CP after receiving the instant query request from the CP, and then clears the charging information and the quantity of traffic containers for the current offline charging call detail record on the UP side. After receiving the charging information reported by the UP, the CP generates a traffic container, records used traffic reported by the UP, and then closes the offline charging call detail record.

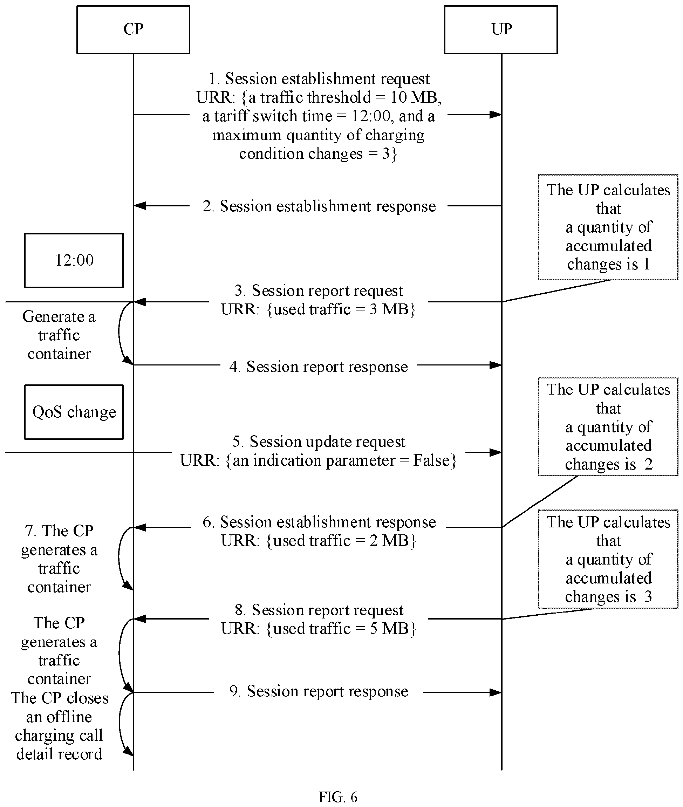

It can be seen that the UP may determine whether a traffic container is to be generated on the CP side based on the indication parameter in the CP. The UP only needs to report charging information to the CP when the CP sends an instant query request and when accumulated used traffic reaches a total traffic threshold. No additional message needs to be exchanged between the CP and the UP for updating a threshold, thereby avoiding an error in processing of the offline charging call detail record. In still another implementation, the UP reports charging information to the CP based on an instant query message from the CP and a subscription condition. As shown in FIG. 6, a process of interaction between the CP and the UP may include the following steps.
1. The CP establishes a session and delivers a message to the UP. The message may be based on a URR and carries a tariff switch time (for example, 12:00), a traffic threshold (for example, 10 M), and a maximum quantity of charging condition changes (which is equal to a maximum quantity of traffic containers Max-condition-number in an offline charging call detail record on a CP side, where Max-condition-number, for example, is set to 3).
2. After receiving the message, the UP returns a response message.
3. When the tariff switch time of 12:00 arrives, a subscription condition is met for the UP to report charging information. Therefore, the UP reports the charging information to the CP, where the charging information carries currently used traffic (3 M). At a same time, the UP calculates that currently a quantity of traffic containers should be 1, and the value is less than the maximum quantity of traffic containers. Therefore, the traffic threshold does not need to be updated. The UP continues to monitor a traffic usage status of a user, and continues to accumulate used traffic on the basis of accumulated used traffic in current reporting. In other words, the UP continues to accumulate used traffic on the basis of 3 M.
4. After receiving the charging information reported by the UP, the CP generates a traffic container and returns a response message to the UP, where the traffic container records that used traffic is 3 M before a tariff switch.
5. When there is a QoS change in the CP at a time when a quantity of traffic containers is less than a maximum quantity, the CP does not generate an offline charging call detail record and does not need to update a threshold. Due to the QoS change, the CP sends an instant query message to the UP. The instant query message carries an indication parameter having a set value. In this example, the CP sets a value of the indication parameter in the instant query message to False (indicating only a traffic container is generated), to indicate, to the UP, that the offline charging call detail record is not closed and only a traffic container is generated on the CP side. The UP only needs to report charging information and does not need to update the threshold.
6. After receiving the instant query message sent by the CP, the UP reports the charging information to the CP, where the charging information includes traffic (for example, 2 M) of the user used before the QoS change in the CP after the tariff switch. At a same time, the UP calculates that currently a quantity of traffic containers should be 2, and the value is less than the maximum quantity of traffic containers. Therefore, the traffic threshold does not need to be updated, and the UP continues to monitor a traffic usage status of the user and continues to accumulate used traffic on the basis of 5 M.
7. The CP receives the charging information and generates a traffic container, where the traffic container records that used traffic of the user is 2 M before the QoS change in the CP after the tariff switch. In this way, there are already two traffic containers in the CP.
8. The UP continues to monitor a traffic usage status of the user, and traffic of 5 M is used by the user again. When accumulated used traffic on a UP side is 10 M and reaches the traffic threshold, a subscription condition is met for the UP to report charging information. Therefore, the UP reports the charging information to the CP, where the charging information includes traffic (5 M) used since last reporting of charging information. At a same time, the UP calculates that currently a quantity of traffic containers should be 3, and the value is equal to the maximum quantity of traffic containers. Because the accumulated used traffic reaches the traffic threshold, and the quantity of traffic containers is also equal to the maximum quantity of traffic containers, the UP clears the charging information for a current offline charging call detail record and the quantity of traffic containers on the UP side.
9. After receiving the charging information reported by the UP, the CP generates a traffic container again and returns a response message to the UP, where the traffic container records that used traffic is 5 M. Because the accumulated used traffic is 10 M and reaches the traffic threshold, and a quantity of traffic containers on the CP side is equal to the maximum quantity of traffic containers, the CP closes the current offline charging call detail record, that is, generates the current offline charging call detail record.

It can be seen that an additional threshold update message does not need to be exchanged between the CP and the UP, thereby preventing the accumulated used traffic from exceeding the traffic threshold.

It should be noted that the traffic threshold may also be replaced with a time threshold. Correspondingly, charging information reported by the UP includes information about used time. Apparently, a person skilled in the art can obtain a technical solution in which the traffic threshold is replaced with the time threshold according to this embodiment of this application. Therefore, details are not described herein.

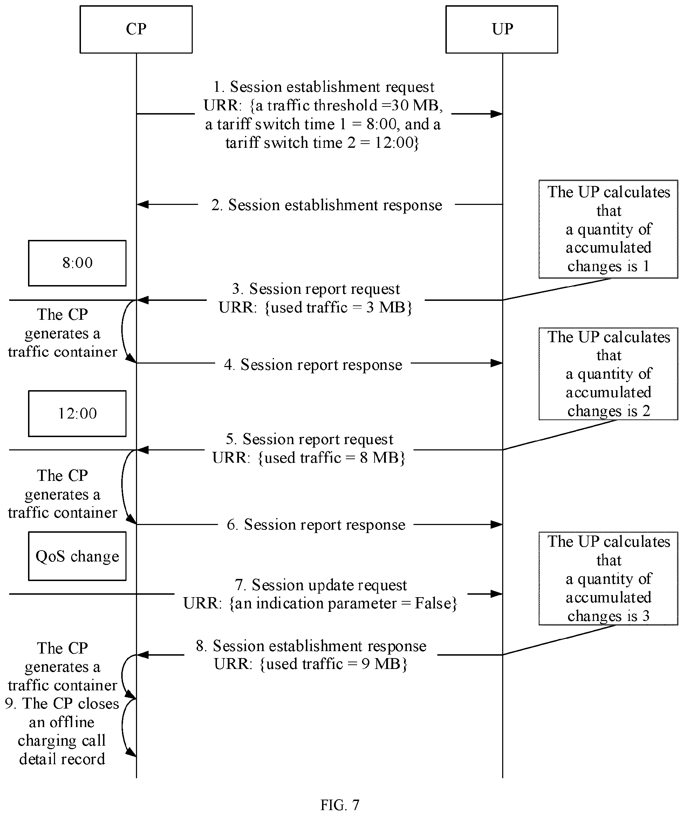

A traffic threshold is used as an example, if a quantity of traffic containers obtained by the UP through calculation is equal to the maximum quantity of traffic containers before accumulated used traffic reaches the traffic threshold, the UP stops collecting charging information for a current offline charging call detail record, and clears the charging information and the quantity of traffic containers for the current offline charging call detail record. On a CP side, the CP also records a quantity of traffic containers generated, and determines that the quantity of traffic containers generated currently is equal to the maximum quantity of traffic containers. Therefore, the CP closes the current offline charging call detail record. Alternatively, if a quantity of traffic containers obtained by the UP through calculation is equal to the maximum quantity of traffic containers before accumulated used traffic reaching the traffic threshold, the UP may report a message to the CP once to instruct the CP to close a current offline charging call detail record, and stop collecting charging information for the current offline charging call detail record. After receiving the message, the CP closes the current offline charging call detail record. As shown in FIG. 7, in still another implementation, a process of interaction between the CP and the UP is as follows:
1. The CP establishes a session and delivers a message to the UP. The message may be based on a URR and carries a tariff switch time 1 (8:00), a tariff switch time 2 (12:00), a traffic threshold (for example, 30 M), and a maximum quantity of charging condition changes (namely, Max-condition-number, where Max-condition-number, for example, is set to 3).
2. After receiving the message, the UP returns a response message.
3. When the tariff switch time 1 of 8:00 arrives, a subscription condition is met for the UP to report charging information. Therefore, the UP reports the charging information to the CP, where the charging information carries currently used traffic (3 M). At a same time, the UP calculates that currently a quantity of traffic containers should be 1, and the value is less than the maximum quantity of traffic containers.
4. After receiving the charging information reported by the UP, the CP generates a traffic container and returns a response message to the UP, where the traffic container records that used traffic is 3 M before a tariff switch.
5. When the tariff switch time 2 of 12:00 arrives, a subscription condition is met for the UP to report charging information. Therefore, the UP reports charging information to the CP, where the charging information carries traffic (8 M) used from the tariff switch time 1 to the tariff switch time 2. Accumulated used traffic is 11 M. At a same time, the UP calculates that currently a quantity of traffic containers should be 2, and the value is less than the maximum quantity of traffic containers.
6. After receiving the charging information reported by the UP, the CP generates a traffic container and returns a response message to the UP, where the traffic container records the traffic (8 M) used from the tariff switch time 1 to the tariff switch time 2.
7. When there is a QoS change in the CP at a time when a quantity of traffic containers is less than the maximum quantity of traffic containers, the CP does not generate an offline charging call detail record and does not need to update a threshold either. Due to the QoS change, the CP sends an instant query message to the UP, where the instant query message carries an indication parameter whose value is set to False (indicating that only a traffic container is generated).
8. After receiving the instant query message sent by the CP, the UP reports charging information to the CP, where the charging information includes traffic (9 M) of the user used before the QoS change after the tariff switch time 2. Accumulated used traffic is 20 M and does not reach the traffic threshold. At a same time, the UP calculates that currently a quantity of traffic containers should be 3, and the value is equal to the maximum quantity of traffic containers. Therefore, the UP clears the charging information and the quantity of traffic containers for a current offline charging call detail record on a UP side.
9. After receiving the charging information reported by the UP, the CP generates a traffic container again and returns a response message to the UP, where the traffic container records that used traffic is 9 M. Accumulated used traffic is 20 M and does not reach the traffic threshold. However, a quantity of traffic containers on a CP side is equal to the maximum quantity of traffic containers. Therefore, the CP closes the current offline charging call detail record, that is, generates the current offline charging call detail record.

In a case shown in FIG. 7, a charging result of the offline charging call detail record is less than the traffic threshold, naturally preventing the charging result of the offline charging call detail record from exceeding the threshold.

In the technical solutions provided in this embodiment of this application, after the CP establishes a session, a message that is sent to the UP carries a maximum quantity of charging condition changes (which is equal to a maximum quantity of traffic containers). The UP reports charging information to the CP based on an instant query request sent by the CP or a subscription condition, and calculates a quantity of traffic containers. If the quantity of traffic containers that is obtained through calculation is less than the maximum quantity of traffic containers, the UP does not need to update a threshold but continues to accumulate used traffic on the basis of existing accumulated used traffic. If the quantity of traffic containers that is obtained through calculation is equal to the maximum quantity of traffic containers, the CP closes an offline charging call detail record, and the UP stops collecting charging information for a current offline charging call detail record and clears the charging information and the quantity of traffic containers for the offline charging call detail record on a UP side. Therefore, the technical solutions provided in the embodiments of this application can reduce additional signaling interaction between the CP and the UP caused by a threshold update, thereby preventing a charging result of the offline charging call detail record from exceeding a threshold due to delayed update message exchange between the CP and the UP.

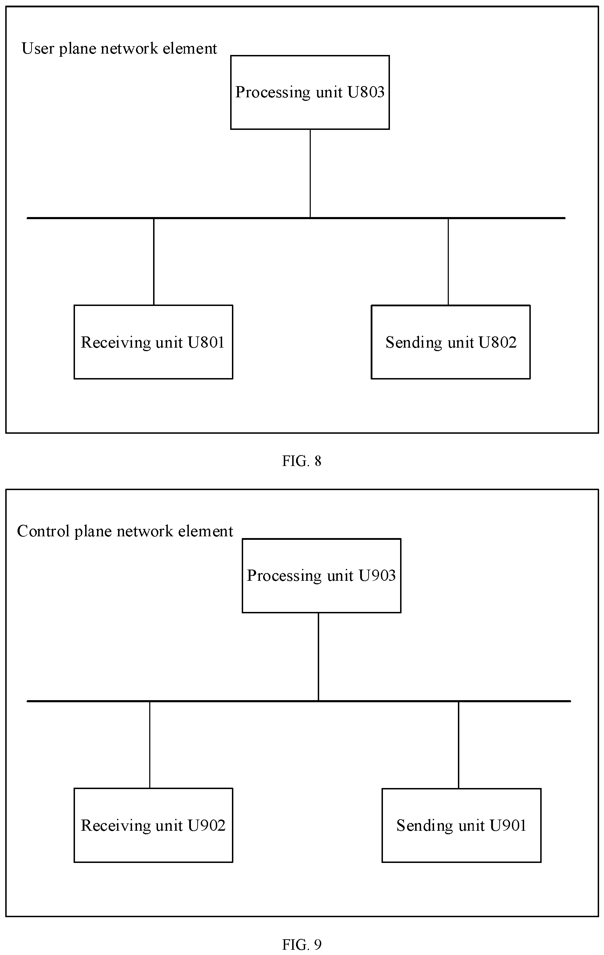

FIG. 8 is a block diagram of a user plane network element according to an embodiment of this application, and the user plane network element includes a receiving unit U801, a sending unit U802 and a processing unit U803.

The receiving unit U801 is configured to receive a first message sent by a control plane network element, where the first message carries a maximum quantity of charging condition changes, and the maximum quantity of charging condition changes is equal to a maximum quantity of traffic containers generated by the control plane network element in an offline charging call detail record. The sending unit U802 is configured to report charging information to the control plane network element.

The processing unit U803 is configured to: calculate a quantity of charging condition changes when an event of reporting, by the sending unit, charging information to the control plane network element occurs;
reserve a value of currently accumulated used traffic and/or a value of currently accumulated used time if the quantity of charging condition changes is less than the maximum quantity of charging condition changes; and
clear charging information on a user plane network element side, if the quantity of charging condition changes is equal to the maximum quantity of charging condition changes. The first message may further carry a time threshold and/or a traffic threshold.

When a charging information reporting condition is met or an instant query request sent by the control plane network element is received, the event of reporting, by the sending unit, charging information to the control plane network element occurs. The charging information reporting condition includes that a current time is a tariff switch time. The instant query request carries an indication parameter, and the indication parameter is used to indicate whether the control plane network element closes, after receiving the charging information reported by the user plane network element, a currently opened offline charging call detail record. If the indication parameter indicates that the control plane network element closes the currently opened offline charging call detail record after receiving the charging information reported by the user plane network element, the processing unit is further configured to clear charging information on the user plane network element side after the sending unit reports the charging information to the control plane network element.

The sending unit is specifically configured to report charging information to the control plane network element when accumulated used traffic reaches the traffic threshold or accumulated used time reaches the time threshold in the user plane network element. The processing unit is further configured to clear charging information on the user plane network element side after the sending unit reports the charging information to the control plane network element.

FIG. 9 is a block diagram of a control plane network element according to an embodiment of this application, and the control plane network element includes a sending unit U901, a receiving unit U902 and a processing unit U903.

The sending unit U901 is configured to send a first message to a user plane network element, where the first message carries a maximum quantity of charging condition changes, and the maximum quantity of charging condition changes is equal to a maximum quantity of traffic containers generated by the control plane network element in an offline charging call detail record.

The receiving unit U902 is configured to receive charging information reported by the user plane network element.

The processing unit U903 is configured to generate a traffic container based on the charging information.

The first message may further carry a time threshold and/or a traffic threshold.

The sending unit is further configured to send an instant query request to the user plane network element. The instant query request carries an indication parameter, and the indication parameter is used to indicate whether the control plane network element closes a currently opened offline charging call detail record after receiving the charging information reported by the user plane network element. If the indication parameter indicates that the control plane network element closes the currently opened offline charging call detail record after receiving the charging information reported by the user plane network element, the processing unit closes the currently opened offline charging call detail record after the receiving unit receives charging information reported by the user plane network element.

An embodiment of this application further provides an offline charging call detail record threshold control system based on a CUPS protocol, where the system includes the user plane network element shown in FIG. 8 and the control plane network element shown in FIG. 9.

An embodiment of this application further provides an EPC gateway, and the gateway includes the user plane network element shown in FIG. 8 and the control plane network element shown in FIG. 9.

An embodiment of this application further provides a computer readable storage medium including an instruction, and when the instruction runs on a computer, the computer is enabled to perform the method in any one of FIG. 3 to FIG. 7.

An embodiment of this application further provides a computer program product including an instruction, and when the computer program product runs on a computer, the computer is enabled to perform the method in any one of FIG. 3 to FIG. 7.

## Claims

1. An offline charging call detail record threshold control method based on a control and user plane separation, CUPS, protocol, comprising:
receiving (U301), by a user plane network element, a first message from a control plane network element, wherein the first message carries a maximum quantity of charging condition changes, and the maximum quantity of charging condition changes is equal to a maximum quantity of traffic containers generated by the control plane network element in an offline charging call detail record;
calculating (U302), by the user plane network element, a quantity of charging condition changes when an event of reporting charging information to the control plane network element occurs;
reserving (303), by the user plane network element, a value of currently accumulated used traffic and/or a value of currently accumulated used time when the quantity of charging condition changes is less than the maximum quantity of charging condition changes;
clearing (304), by the user plane network element, charging information on a user plane network element side when the quantity of charging condition changes is equal to the maximum quantity of charging condition changes.

2. The method according to claim 1, wherein the first message further carries a time threshold and/or a traffic threshold.

3. The method according to claim 1, wherein when a charging information reporting condition is met or an instant query request from the control plane network element is received, the event of reporting, by the user plane network element, charging information to the control plane network element occurs, wherein the charging information reporting condition comprises that a current time is a tariff switch time.

4. The method according to claim 3, wherein the instant query request carries an indication parameter, and the indication parameter is used to indicate whether the control plane network element closes a currently opened offline charging call detail record after receiving charging information reported by the user plane network element.

5. The method according to claim 4, wherein if the indication parameter indicates that the control plane network element closes the currently opened offline charging call detail record after receiving the charging information reported by the user plane network element, clearing, by the user plane network element, charging information on the user plane network element side after reporting the charging information to the control plane network element.

6. The method according to any one of claims 1 to 5, further comprising:
When accumulated used traffic reaches a traffic threshold or accumulated used time reaches a time threshold in the user plane network element, reporting, by the user plane network element, charging information to the control plane network element, and clearing charging information on the user plane network element side; and
closing, by the control plane network element, the currently opened offline charging call detail record after receiving the charging information.

7. An offline charging call detail record threshold control method based on a control and user plane separation, CUPS, protocol, comprising:
sending, by a control plane network element, a first message to a user plane network element, wherein the first message carries a maximum quantity of charging condition changes, and the maximum quantity of charging condition changes is equal to a maximum quantity of traffic containers generated by the control plane network element in an offline charging call detail record; and
receiving charging information reported by the user plane network element, and generating a traffic container based on the charging information wherein, the user plane network element, calculates a quantity of charging condition changes when it reports an event of charging information to the control plane network element, and when the quantity of charging condition changes, is less than the maximum quantity of charging condition changes, the user plane network element reserves the value of the current accumulated used traffic and/or current accumulated used time, and when the quantity of charging condition changes is equal to the maximum quantity of charging condition changes, the user plane, clears the charging information on the user plane network side element.

8. The method according to claim 7, wherein the first message further carries a time threshold and/or a traffic threshold.

9. The method according to claim 7, further comprising:
sending an instant query request to the user plane network element, wherein the instant query request carries an indication parameter, and the indication parameter is used to indicate whether the control plane network element closes a currently opened offline charging call detail record after receiving the charging information reported by the user plane network element.

10. The method according to claim 9, wherein if the indication parameter indicates that the control plane network element closes the currently opened offline charging call detail record after receiving the charging information reported by the user plane network element, the currently opened offline charging call detail record is closed after the charging information reported by the user plane network element is received.

11. A user plane network element, configured to perform the method according to any one of claims 1 to 6.

12. A control plane network element, configured to perform the method according to any one of claims 7 to 10.

13. An offline charging call detail record threshold control system based on a control and user plane separation,CUPS, protocol, comprising a user plane network element according to claim 11 and a control plane network element according to claim 12.

14. A computer readable storage medium, wherein the computer readable storage medium stores an instruction, and when the instruction runs on a computer, the computer is enabled to perform the offline charging call detail record threshold control method based on the CUPS protocol according to any one of claims 1 to 6.

15. A computer readable storage medium, wherein the computer readable storage medium stores an instruction, and when the instruction runs on a computer, the computer is enabled to perform the offline charging call detail record threshold control method based on the CUPS protocol according to any one of claims 7 to 10.

## Patentansprüche

1. Verfahren zum Steuern einer Offline-Vergebührungsgesprächsdatensatzschwelle, basierend auf einem Steuerungs- und Benutzerebenentrennungs(control and user plane separation - CUPS)-Protokoll, das Folgendes umfasst:
Empfangen (U301) einer ersten Nachricht von einer Steuerungsebenennetzkomponente durch eine Benutzerebenennetzkomponente, wobei die erste Nachricht eine maximale Menge von Vergebührungsbedingungsänderungen überträgt und die maximale Menge von Vergebührungsbedingungsänderungen gleich einer maximalen Menge von Verkehrs-Containern, die durch die Steuerungsebenennetzkomponente in einem Offline-Vergebührungsgesprächsdatensatz erzeugt werden, ist;
Berechnen (U302) einer Menge von Vergebührungsbedingungsänderungen durch die Benutzerebenennetzkomponente, wenn ein Ereignis eines Meldens von Vergebührungsinformationen an die Steuerungsebenennetzkomponente erfolgt;
Belegen (303) eines Werts von aktuell akkumuliertem verwendetem Verkehr und/oder eines Werts von akkumulierter verwendeter Zeit durch die Benutzerebenennetzkomponente, wenn die Menge von Vergebührungsbedingungsänderungen kleiner als die maximale Menge von Vergebührungsbedingungsänderungen ist;
Löschen (304) von Vergebührungsinformationen auf einer Benutzerebenennetzkomponentenseite durch die Benutzerebenennetzkomponente, wenn die Menge von Vergebührungsbedingungsänderungen gleich der maximalen Menge von Vergebührungsbedingungsänderungen ist.

2. Verfahren nach Anspruch 1, wobei die erste Nachricht ferner eine Zeitschwelle und/oder eine Verkehrsschwelle überträgt.

3. Verfahren nach Anspruch 1, wobei, wenn eine Vergebührungsinformationsmeldebedingung erfüllt ist oder eine sofortige Abfrageanforderung von der Steuerungsebenennetzkomponente empfangen wird, das Ereignis des Meldens von Vergebührungsinformationen durch die Benutzerebenennetzkomponente an die Steuerungsebenennetzkomponente erfolgt, wobei die Vergebührungsinformationsmeldebedingung umfasst, dass eine aktuelle Zeit eine Tarifumschaltzeit ist.

4. Verfahren nach Anspruch 3, wobei die sofortige Abfrageanforderung einen Anzeigeparameter überträgt und der Anzeigeparameter verwendet wird, um anzuzeigen, ob die Steuerungsebenennetzkomponente einen aktuell geöffneten Offline-Vergebührungsgesprächsdatensatz nach dem Empfangen von Vergebührungsinformationen, die durch die Benutzerebenennetzkomponente gemeldet werden, schließt.

5. Verfahren nach Anspruch 4, wobei, falls der Anzeigeparameter anzeigt, dass die Steuerungsebenennetzkomponente den aktuell geöffneten Offline-Vergebührungsgesprächsdatensatz nach dem Empfangen von Vergebührungsinformationen, die durch die Benutzerebenennetzkomponente gemeldet werden, schließt, Vergebührungsinformationen auf der Benutzerebenennetzkomponentenseite durch die Benutzerebenennetzkomponente nach dem Melden der Vergebührungsinformationen an die Steuerungsebenennetzkomponente gelöscht werden.

6. Verfahren nach einem der Ansprüche 1 bis 5, das ferner Folgendes umfasst:
wenn in der Benutzerebenennetzkomponente der akkumulierte verwendete Verkehr eine Verkehrsschwelle erreicht oder die akkumulierte verwendete Zeit eine Zeitschwelle erreicht, Melden von Vergebührungsinformationen an die Steuerungsebenennetzkomponente durch die Benutzerebenennetzkomponente und Löschen von Vergebührungsinformationen auf der Benutzerebenennetzkomponentenseite; und
Schließen des aktuell geöffneten Offline-Vergebührungsgesprächsdatensatzes durch die Steuerungsebenennetzkomponente nach dem Empfangen der Vergebührungsinformationen.

7. Verfahren zum Steuern einer Offline-Vergebührungsgesprächsdatensatzschwelle, basierend auf einem Steuerungs- und Benutzerebenentrennungs(CUPS)-Protokoll, das Folgendes umfasst:
Senden einer ersten Nachricht an eine Benutzerebenennetzkomponente durch die Steuerungsebenennetzkomponente, wobei die erste Nachricht eine maximale Menge von Vergebührungsbedingungsänderungen überträgt und die maximale Menge von Vergebührungsbedingungsänderungen gleich einer maximalen Menge von Verkehrs-Containern, die durch die Steuerungsebenennetzkomponente in einem Offline-Vergebührungsgesprächsdatensatz erzeugt werden, ist; und
Empfangen von Vergebührungsinformationen, die durch die Benutzerebenennetzkomponente gemeldet werden, und Erzeugen von einem Verkehrs-Container, basierend auf den Vergebührungsinformationen, wobei die Benutzerebenennetzkomponente eine Menge von Vergebührungsbedingungsänderungen berechnet, wenn sie ein Ereignis von Vergebührungsinformationen an die Steuerungsebenennetzkomponente meldet, und, wenn die Menge von Vergebührungsbedingungsänderungen kleiner als die maximale Menge von Vergebührungsbedingungsänderungen ist, die Benutzerebenennetzkomponente den Wert des aktuellen akkumulierten verwendeten Verkehrs und/oder der aktuellen akkumulierten verwendeten Zeit belegt, und, wenn die Menge von Vergebührungsbedingungsänderungen gleich der maximalen Menge von Vergebührungsbedingungsänderungen ist, die Benutzerebene die Vergebührungsinformationen auf der Benutzerebenennetzkomponentenseite löscht.

8. Verfahren nach Anspruch 7, wobei die erste Nachricht ferner eine Zeitschwelle und/oder eine Verkehrsschwelle überträgt.

9. Verfahren nach Anspruch 7, das ferner Folgendes umfasst:
Senden einer sofortigen Abfrageanforderung an die Benutzerebenennetzkomponente, wobei die sofortige Abfrageanforderung einen Anzeigeparameter überträgt und der Anzeigeparameter verwendet wird, um anzuzeigen, ob die Steuerungsebenennetzkomponente einen aktuell geöffneten Offline-Vergebührungsgesprächsdatensatz nach dem Erhalten der Vergebührungsinformationen, die durch die Steuerungsebenennetzkomponente gemeldet werden, schließt.

10. Verfahren nach Anspruch 9, wobei, falls der Anzeigeparameter anzeigt, dass die Steuerungsebenennetzkomponente den aktuell geöffneten Offline-Vergebührungsgesprächsdatensatz nach dem Erhalten der Vergebührungsinformationen, die durch die Steuerungsebenennetzkomponente gemeldet werden, schließt, der aktuell geöffnete Offline-Vergebührungsgesprächsdatensatz geschlossen wird, nachdem die Vergebührungsinformationen, die durch die Benutzerebenennetzkomponente gemeldet werden, erhalten worden sind.

11. Benutzerebenennetzkomponente, die konfiguriert ist, um das Verfahren nach einem der Ansprüche 1 bis 6 durchzuführen.

12. Steuerungsebenennetzkomponente, die konfiguriert ist, um das Verfahren nach einem der Ansprüche 7 bis 10 durchzuführen.

13. System zum Steuern einer Offline-Vergebührungsgesprächsdatensatzschwelle, basierend auf einem Steuerungs- und Benutzerebenentrennungs(CUPS)-Protokoll, das eine Benutzerebenennetzkomponente nach Anspruch 11 und eine Steuerungsebenennetzkomponente nach Anspruch 12 umfasst.

14. Computerlesbares Speichermedium, wobei das computerlesbare Speichermedium eine Anweisung speichert und, wenn die Anweisung auf einem Computer läuft, der Computer aktiviert ist, um das Verfahren zum Steuern einer Offline-Vergebührungsgesprächsdatensatzschwelle basierend auf dem CUPS-Protokoll nach einem der Ansprüche 1 bis 6 durchzuführen.

15. Computerlesbares Speichermedium, wobei das computerlesbare Speichermedium eine Anweisung speichert und, wenn die Anweisung auf einem Computer läuft, der Computer aktiviert ist, um das Verfahren zum Steuern einer Offline-Vergebührungsgesprächsdatensatzschwelle basierend auf dem CUPS-Protokoll nach einem der Ansprüche 7 bis 10 durchzuführen.

## Revendications

1. Procédé de contrôle de seuil d'enregistrement détaillé d'appel de facturation hors ligne, basé sur un protocole de séparation du plan de contrôle et du plan d'utilisateur, CUPS, comprenant :
la réception (U301), par un élément de réseau du plan d'utilisateur, d'un premier message à partir d'un élément de réseau du plan de contrôle, le premier message transportant une quantité maximale de changements de condition de facturation et la quantité maximale de changements de condition de facturation étant égale à une quantité maximale de conteneurs de trafic générés par l'élément de réseau du plan de contrôle dans un enregistrement détaillé d'appel de facturation hors ligne ;
le calcul (U302), par l'élément de réseau du plan d'utilisateur, d'une quantité de changements de condition de facturation lorsqu'un événement de rapport d'informations de facturation se produit sur l'élément de réseau du plan de contrôle ;
la réservation (303), par l'élément de réseau du plan d'utilisateur, d'une valeur de trafic utilisé actuellement accumulé et/ou d'une valeur de temps utilisé actuellement accumulé lorsque la quantité de changements de condition de facturation est inférieure à la quantité maximale de changements de condition de facturation ;
la suppression (304), par l'élément de réseau du plan d'utilisateur, d'informations de facturation sur un côté élément de réseau du plan d'utilisateur lorsque la quantité de changements de condition de facturation est égale à la quantité maximale de changements de condition de facturation.

2. Procédé selon la revendication 1, dans lequel le premier message transporte en outre un seuil de temps et/ou un seuil de trafic.

3. Procédé selon la revendication 1, dans lequel lorsqu'une condition de rapport d'informations de facturation est remplie ou qu'une demande de requête instantanée à partir de l'élément de réseau du plan de contrôle est reçue, l'événement de rapport, par l'élément de réseau du plan d'utilisateur, d'informations de facturation à l'élément de réseau du plan de contrôle se produit, la condition de rapport d'informations de facturation comprenant qu'un temps actuel est un temps de commutation tarifaire.

4. Procédé selon la revendication 3, dans lequel la demande de requête instantanée transporte un paramètre d'indication, et le paramètre d'indication est utilisé pour indiquer si l'élément de réseau du plan de contrôle ferme un enregistrement détaillé d'appel de facturation hors ligne actuellement ouvert après réception d'informations de facturation rapportées par l'élément de réseau du plan d'utilisateur.

5. Procédé selon la revendication 4, dans lequel si le paramètre d'indication indique que l'élément de réseau du plan de contrôle ferme l'enregistrement détaillé d'appel de facturation hors ligne actuellement ouvert après réception des informations de facturation rapportées par l'élément de réseau du plan d'utilisateur, la suppression, par l'élément de réseau du plan d'utilisateur, d'informations de facturation sur le côté de l'élément de réseau du plan d'utilisateur après le rapport des informations de facturation à l'élément de réseau du plan de contrôle.

6. Procédé selon l'une quelconque des revendications 1 à 5, comprenant en outre :
lorsque le trafic utilisé accumulé atteint un seuil de trafic ou que du temps utilisé accumulé atteint un seuil de temps dans l'élément de réseau du plan d'utilisateur, le rapport, par l'élément de réseau du plan d'utilisateur, d'informations de facturation à l'élément de réseau du plan de contrôle et la suppression des informations de facturation sur le côté de l'élément de réseau du plan d'utilisateur ; et
la fermeture, par l'élément de réseau du plan de contrôle, de l'enregistrement détaillé d'appel de facturation hors ligne actuellement ouvert après réception des informations de facturation.

7. Procédé de contrôle de seuil d'enregistrement détaillé d'appel de facturation hors ligne, basé sur un protocole de séparation du plan de contrôle et du plan d'utilisateur, CUPS, comprenant :
l'envoi, par un élément de réseau du plan de contrôle, d'un premier message à un élément de réseau du plan d'utilisateur, dans lequel le premier message transporte une quantité maximale de changements de condition de facturation et la quantité maximale de changements de condition de facturation est égale à une quantité maximale de conteneurs de trafic générés par l'élément de réseau du plan de contrôle dans un enregistrement détaillé d'appel de facturation hors ligne ; et
la réception d'informations de facturation rapportées par l'élément de réseau du plan d'utilisateur, et la génération d'un conteneur de trafic sur la base des informations de facturation, dans lequel, l'élément de réseau du plan d'utilisateur calcule une quantité de changements de condition de facturation lorsqu'il rapporte un événement d'informations de facturation à l'élément de réseau du plan de contrôle, et lorsque la quantité de changements de condition de facturation est inférieure à la quantité maximale de changements de condition de facturation, l'élément de réseau du plan d'utilisateur réserve la valeur du trafic utilisé accumulé actuel et/ou du temps utilisé accumulé actuel, et lorsque la quantité de changements de condition de facturation est égale à la quantité maximale de changements de condition de facturation, le plan d'utilisateur supprime les informations de facturation sur le côté de l'élément de réseau du plan d'utilisateur.

8. Procédé selon la revendication 7, dans lequel le premier message transporte en outre un seuil de temps et/ou un seuil de trafic.

9. Procédé selon la revendication 7, comprenant en outre :
l'envoi d'une demande de requête instantanée à l'élément de réseau du plan d'utilisateur, la demande de requête instantanée transportant un paramètre d'indication, et le paramètre d'indication étant utilisé pour indiquer si l'élément de réseau du plan de contrôle ferme un enregistrement détaillé d'appel de facturation hors ligne actuellement ouvert après réception des informations de facturation rapportées par l'élément de réseau du plan d'utilisateur.

10. Procédé selon la revendication 9, dans lequel si le paramètre d'indication indique que l'élément de réseau du plan de contrôle ferme l'enregistrement détaillé d'appel de facturation hors ligne actuellement ouvert après réception des informations de facturation rapportées par l'élément de réseau du plan d'utilisateur, l'enregistrement détaillé d'appel de facturation hors ligne actuellement ouvert est fermé après réception des informations de facturation rapportées par l'élément de réseau du plan d'utilisateur.

11. Élément de réseau du plan d'utilisateur, configuré pour effectuer le procédé selon l'une quelconque des revendications 1 à 6.

12. Élément de réseau du plan de contrôle, configuré pour effectuer le procédé selon l'une quelconque des revendications 7 à 10.

13. Système de contrôle de seuil d'enregistrement détaillé d'appel de facturation hors ligne basé sur un protocole de séparation du plan de contrôle et du plan d'utilisateur, CUPS, comprenant un élément de réseau du plan d'utilisateur selon la revendication 11 et un élément de réseau du plan de contrôle selon la revendication 12.

14. Support de stockage lisible par ordinateur, dans lequel le support de stockage lisible par ordinateur stocke une instruction, et lorsque l'instruction est exécutée sur un ordinateur, l'ordinateur est activé pour effectuer le procédé de contrôle de seuil d'enregistrement détaillé d'appel de facturation hors ligne sur la base du protocole CUPS selon l'une quelconque des revendications 1 à 6.

15. Support de stockage lisible par ordinateur, dans lequel le support de stockage lisible par ordinateur stocke une instruction, et lorsque l'instruction est exécutée sur un ordinateur, l'ordinateur est activé pour effectuer le procédé de contrôle de seuil d'enregistrement détaillé d'appel de facturation hors ligne sur la base du protocole CUPS selon l'une quelconque des revendications 7 à 10.
